# EUROPÄISCHE PATENTSCHRIFT

(11) **EP 2 746 134 B1**
(45) Veröffentlichungstag und Bekanntmachung des Hinweises auf die Patenterteilung: **08.07.2015**
(21) Anmeldenummer: 13004244.3
(22) Anmeldetag: 28.08.2013
(51) Int. Cl.: B62D 1/04, B62D 1/10, B60N 3/00

(54) **Lenkrad für ein Fahrzeug, insbesondere für ein Nutzfahrzeug**
Steering wheel for a vehicle, in particular a commercial vehicle
Volant pour un véhicule, notamment pour un véhicule utilitaire

(30) Priorität: 19.12.2012 DE 102012024793
(43) Veröffentlichungstag der Anmeldung: 25.06.2014
(73) Patentinhaber: MAN Truck & Bus AG, 80995 München (DE)
(72) Erfinder: Michel, Britta, 81675 München (DE); Schieder, Harald, 93133 Burglengenfeld (DE); Zimmermann, Andreas, 80995 München (DE); Dörner, Karlheinz, 85757 Karlsfeld (DE)

(56) Entgegenhaltungen:
- DE-A1- 3 405 981
- DE-C1- 4 410 485
- JP-U- S60 142 163
- JP-U- S61 142 673
- US-A- 3 937 101

## Beschreibung

Die Erfindung betrifft ein Lenkrad für ein Fahrzeug, insbesondere für ein Nutzfahrzeug, nach dem Oberbegriff des Anspruchs 1. Ein solches Lenkrad ist aus der JP 560 142163 U bekannt.

Insbesondere beim Warenverkehr mit Hilfe von Nutzfahrzeugen besteht regelmäßig die Notwendigkeit, verschiedenste Schreibarbeiten auszuführen zu müssen. Als Beispiel hierfür sind Frachtpapiere, Lieferscheine, Zollpapiere oder dergleichen zu nennen. Der Austausch dieser Papiere bzw. Dokumente findet regelmäßig außerhalb des Fahrzeugs statt, so dass der Fahrzeugführer zur Durchführung der Schreibarbeiten regelmäßig in das Fahrzeug einsteigen muss.

In diesem Zusammenhang sind bereits mobile Schreibunterlagen allgemein bekannt, die mit einer Halterung für das Lenkrad versehen sind und somit am Lenkrad vom Fahrer befestigt werden können. Ein Beispiel hierfür zeigt die DE 43 44 079 C1, die einen Lenkradtisch zum Anhängen an ein Lenkrad eines Nutzfahrzeugs offenbart, der bei seinem Nichtgebrauch als Schreibunterlage zu einem Handkoffer zusammengeklappt werden kann.

Eine weitere mobile, an einem Lenkrad befestigbare Schreibunterlage ist ferner auch aus der DE 1 862 323 U bekannt.

Die DE 198 44 805 A1 zeigt einen Tisch für ein Fahrzeug, der unter anderem auch mit einem Lenkrad verbunden werden kann, um dort dann zum Beispiel als Schreibunterlage Verwendung zu finden. Diese Tischplatte weist gegenüber der Auflagefläche abgewinkelte feste Seitenbereiche auf, die in der Aktivstellung des Tisches jeweils mit einer Außenkante an dem Fahrzeugbauteil abstützend anliegen.

Ferner zeigt die DE 83 03 313 U1 eine Schreibunterlage, die an einem Lenkrad eines Fahrzeugs eingehängt werden kann.

All diesen Schreibunterlagen ist gemein, dass diese in der Nicht-Gebrauchsstellung separat in einem Fahrzeug verstaut werden müssen und deren Handhabung relativ kompliziert und aufwendig ist.

Aus diesem Grund verwenden die Fahrzeugführer für das Ausfüllen von Papieren und Dokumenten häufig die Oberseite einer Lenkradnabe des Lenkrads als Schreibunterlage bzw. Auflagefläche. Hier besteht jedoch das Problem, dass keine großflächige Auflage möglich ist und dort zudem regelmäßig auch keine ebene Auflagefläche zur Verfügung steht, so dass diese Vorgehensweise die Durchführung der Schreibarbeiten erschwert bzw. behindert.

Demgegenüber ist es Aufgabe der vorliegenden Erfindung, ein Lenkrad für ein Fahrzeug, insbesondere für ein Nutzfahrzeug, zur Verfügung zu stellen, dessen Funktionsfähigkeit im Hinblick auf die Durchführung von Schreibarbeiten wesentlich erhöht ist.

Diese Aufgabe wird gelöst mit den Merkmalen des Anspruchs 1. Besonders bevorzugte Ausgestaltungen sind Gegenstand der darauf rückbezogenen Unteransprüche.

Gemäß Anspruch 1 wird ein Lenkrad für ein Fahrzeug, insbesondere für ein Nutzfahrzeug, vorgeschlagen, das eine Lenkradnabe und einen äußeren Lenkradkranz aufweist. Erfindungsgemäß ist vorgesehen, dass die Lenkradnabe ein Naben-Basiselement aufweist, das insbesondere ortsfest ausgebildet ist, an welchem Naben-Basiselement als integraler Bestandteil der Lenkradnabe ein relativ zum Naben-Basiselement verlagerbares weiteres Nabenelement so angebunden ist, dass das weitere Nabenelement in einer Verlagerungs- bzw. Gebrauchsposition zusammen mit dem Naben-Basiselement eine im Wesentlichen ebene Auflagefläche als Schreibunterlage ausbildet. Erfindungsgemäß ist in diesem Zusammenhang weiter vorgesehen, dass sich das weitere Nabenelement in dieser Verlagerungs- bzw. Gebrauchsposition mit einem definierten Abstützbereich am Lenkradkranz abstützt.

Mit einem derart ausgebildeten Lenkrad kann die Lenkradnabe bei Bedarf auf einfache Weise durch einfaches Verlagern des Naben-Schwenkelementes in eine Schreibunterlage verwandelt werden, ohne dass hierfür eine durch ein separates Bauteil gebildete Schreibunterlage in aufwendiger Weise am Lenkrad montiert werden muss. Mit der erfindungsgemäßen integralen Lösung kann somit vom Fahrzeugführer individuell jederzeit entschieden werden, ob er die integralen Bestandteile des Lenkrads bzw. der Lenkradnabe bildende Schreibunterlage benutzen will oder nicht.

Mit der erfindungsgemäßen Lösung wird somit auf einfache Weise sichergestellt, dass der herkömmliche optische Gesamteindruck eines Lenkrads nicht verändert wird und trotzdem für den Fahrer eine hervorragend geeignete Schreibunterlage zur Verfügung gestellt wird.

Ein weiterer wesentlicher Vorteil dieser lenkradintegralen, erfindungsgemäßen Lösung ist, dass hiermit eine lenkradseitige ausreichend große und flächige Schreibunterlage zur Verfügung gestellt wird, die die Durchführung von Schreibarbeiten und das Ablegen von Dokumenten bzw. Papieren wesentlich erleichtert.

Die Verlagerung des weiteren Nabenelementes relativ zum Naben-Basiselement kann grundsätzlich auf unterschiedliche Art und Weise durchgeführt werden, zum Beispiel mittels einer Schwenk- und/oder Hebelarmverbindung. Besonders bevorzugt ist allerdings eine Ausgestaltung, bei der die Lenkradnabe ein mittels einer Schwenkgelenkverbindung schwenkbar an dem Naben-Basiselement angelenktes Naben-Schwenkelement als weiteres Nabenelement aufweist, das in einer Grundposition an dem Naben-Basiselement anliegt, vorzugsweise dort in einer flächigen Anlageverbindung anliegt, und dass im aufgeschwenkten Zustand zusammen mit dem Naben-Basiselement die im Wesentlichen ebene Auflagefläche als Schreibunterlage ausbildet, wobei sich das Naben-Schwenkelement in diesem Fall dann mit einem Abstützbereich am Lenkradkranz abstützt. Eine derartige Schwenkgelenkverbindung lässt sich einfach und funktionssicher herstellen und ermöglicht somit dem Bediener das einfache und funktionssichere Überführen zwischen den unterschiedlichen Positionen.

Das bevorzugt als Naben-Schwenkelement ausgebildete weitere Nabenelement ist bevorzugt so ausgebildet, dass das weitere Nabenelement in der auf dem Naben-Basiselement aufliegenden, bevorzugt flächig aufliegenden, Grundposition dem Fahrer zugewandt ist. Diese Nabenoberseite kann in üblicher Weise mit einem Zierelement, einem Firmenemblem, einem Logo oder dergleichen versehen sein.

Erfindungsgemäß wird vorgeschlagen, dass der nabenseitige Abstützbereich durch eine muldenförmige Ausbildung gebildet ist, in der der zugeordnete Lenkradkranzteilbereich im aufgeklappten Zustand des weiteren Nabenelementes konturangepasst einliegt und/oder aufgenommen ist. Damit wird eine zuverlässige Abstützung des weiteren Nabenelementes in der Gebrauchsfunktion als Schreibunterlage erzielt. Besonders bevorzugt ist in diesem Zusammenhang eine Ausgestaltung, bei der die muldenförmige Ausnehmung und/oder der zugeordnete Lenkradkranzteilbereich so ausgebildet ist bzw. sind, insbesondere aus einem solchen Material hergestellt ist bzw. sind, dass die muldenförmige Ausnehmung den zugeordneten Lenkradkranzteilbereich in der Abstützposition hintergreift. Damit wird auf einfache Weise sichergestellt, dass die Schreibunterlage zuverlässig in der Abstützposition gehalten wird.

Gemäß einer fertigungstechnisch einfach und preiswert herstellbaren Ausführungsform wird vorgeschlagen, dass das weitere Nabenelement im Wesentlichen plattenförmig ausgebildet ist. Mit einer derartigen plattenförmigen Ausgestaltung kann auf besonders einfache Weise die ebene Auflagefläche für die Schreibunterlagenfunktion hergestellt werden.

Die zuvor beschriebene bevorzugte Schwenkgelenkverbindung ist zudem bevorzugt so ausgebildet, dass die einander zugeordneten, mit Bezug zu einer Lenkradgrundpositiön bei Geradeausfahrt oberen Randbereichen des Naben-Schwenkelementes und des Naben-Basiselementes vorgesehen ist. Damit braucht das Naben-Schwenkelement vom Fahrzeugführer bzw. vom Benutzer, der die Schreibunterlagenfunktion nutzen will, lediglich aufgeklappt bzw. abgeklappt werden, um die Funktion der Schreibunterlage herzustellen bzw. wieder rückgängig zu machen.

Das Naben-Basiselement und das weitere Nabenelement erstrecken sich mit Bezug zu einer Lenkradgrundposition bei Geradeausfahrt in etwa von einem mittleren Lenkradbereich ausgehend zu den Seiten hin sowie nach unten hin bis in unmittelbare Nähe des Lenkradkranzes (bevorzugt mit einem definierten Spaltabstand), um sicherzustellen, dass bei verlagertem, insbesondere aufgeklapptem bzw. aufgeschwenktem, weiteren Nabenelement eine ausreichend große, flächige Schreibunterlage zur Verfügung gestellt wird.

Gemäß einer weiteren besonders bevorzugten Ausgestaltung wird vorgeschlagen, dass das weitere Nabenelement und das Naben-Basiselement eine im Wesentlichen gleiche Außenkontur, zum Beispiel eine trapezförmige Außenkontur, aufweisen dergestalt, dass das weitere Nabenelement das Naben-Basiselement in der Grundposition im Wesentlichen überdeckt. Damit wird auf einfache Weise sichergestellt, dass in der Grundposition ein üblicher optischer Lenkrad-Gesamteindruck vermittelt wird.

Des Weiteren kann vorgesehen sein, dass die Schwenkgelenkverbindung zwischen dem Naben-Basiselement und dem Naben-Schwenkelement mit Bezug zu einer Lenkradgrundposition bei Geradeausfahrt in einem mittleren Bereich des Lenkrades angeordnet ist und in etwa horizontal ausgerichtet ist. Dadurch wird sichergestellt, dass sowohl das Naben-Basiselement als auch das Naben-Schwenkelement auf einfache Weise in etwa gleich ausgebildet werden können und mit gleicher Fläche zur Ausbildung einer ausreichend großen Auflagefläche als Schreibunterlage beitragen können. Auch dies hilft wiederum, den optischen Gesamteindruck insgesamt wesentlich zu verbessern, da keine eventuell unansehnlichen Überstände oder dergleichen vorhanden sind.

Ferner können weitere Funktionselemente in die ebene Auflagefläche integriert sein, zum Beispiel eine Stiftausnehmung vorgesehen sein, in die ein Stift eingeclipst wird. Diese nutförmige Stiftausnehmung kann gegebenenfalls auch in wenigstens einem Teilbereich zu einer Eingriffsmulde erweitert sein.

Das Lenkrad selbst kann grundsätzlich so ausgebildet sein, dass die Lenkradnabe unmittelbar in den äußeren Lenkradkranz übergeht bzw. diesen ausbildet. Gemäß einer besonders bevorzugten Ausgestaltung wird jedoch vorgeschlagen, dass das Lenkrad Lenkradspeichen aufweist, die einerseits mit dem Lenkradkranz und andererseits mit dem Naben-Basiselement fest verbunden sind. Ein derartiger an sich üblicher Aufbau eines Lenkrades hilft wesentlich, das Handling und die Haptik zu verbessern.

Insbesondere für einen klapperfreien Aufbau ist es vorteilhaft, dass das weitere Nabenelement in dessen Grundposition mittels einer Halteeinrichtung, insbesondere mittels eines Vorspannelementes, wie beispielsweise eines Federelementes oder dergleichen, das in das Schwenkgelenk integriert ist, und/oder mittels einer Rasteinrichtung, an dem Naben-Basiselement gehalten ist. Besonders bevorzugt ist in diesem Zusammenhang eine Ausgestaltung, bei der ein Vorspannelement vorgesehen ist, zum Beispiel eine Schenkelfeder oder dergleichen, das vorzugsweise in eine Schwenkgelenkverbindung integriert ist. Ein derartiges Vorspannelement kann dann das Naben-Schwenkelement beim Freigeben der Halteverbindung der Halteeinrichtung in die Gebrauchsposition verlagern, insbesondere auch in die Abstützposition überführen.

Die Erfindung betrifft desweiteren ein Fahrzeug, insbesondere ein Nutzfahrzeug, mit einem Lenkrad, wie es zuvor beschrieben worden ist. Die sich hierdurch ergebenden Vorteile wurden ebenfalls bereits zuvor beschrieben, so dass diesbezüglich auf die zuvor gemachten Ausführungen verwiesen wird.

Die Erfindung wird nachfolgend anhand einer Zeichnung näher erläutert.

Es zeigen:
- Fig. 1: schematisch und beispielhaft eine Innenansicht eines Führerhauses eines Lastkraftwagens mit lenkradseitig ausgebildeter Schreibunterlage,
- Fig. 2: das Lenkrad gemäß Fig. 1 in einer Ausgangs- bzw. Grundposition,
- Fig. 3: das Lenkrad gemäß Fig. 2 mit nach oben aufgeklapptem Naben-Schwenkelement, und
- Fig. 4: schematisch eine Draufsicht auf das Lenkrad mit aufgeklappter Schreibunterlage.

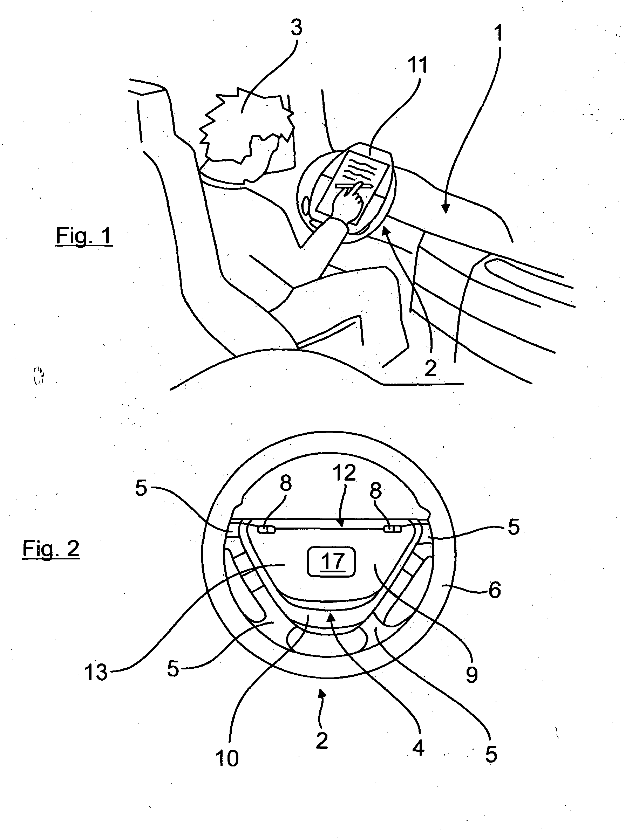

In der Fig. 1 schematisch und beispielhaft eine Innenansicht eines Führerhauses 1 eines Lastkraftwagens als Nutzfahrzeug gezeigt, bei dem ein Fahrzeugführer 3 ein nachfolgend in Verbindung mit den Fig. 2 bis 4 näher erläutertes Lenkrad 2 bzw. eine Lenkradnabe 4 des Lenkrads 2 als Schreibunterlage 11 verwendet.

Das Lenkrad 2 weist eine innere Lenkradnabe 4 auf, die zweiteilig ausgebildet ist und aus einem Naben-Basiselement 7 aufgebaut ist, das über Lenkradspeichen 5 mit einem äußeren Lenkradkranz 6 verbunden ist. Das Naben-Basiselement 7 ist über eine Schwenkgelenkverbindung 8 mit einem hier plattenförmigen Naben-Schwenkelement 9 verbunden, das in der in der Fig. 2 gezeigten Grund- und Ausgangsposition in einer flächigen Anlageverbindung auf dem Naben-Basiselement 7 aufliegt bzw. dort anliegt. Das Naben-Basiselement 7 und das Naben-Schwenkelement 9 weisen im Wesentlichen eine gleiche Außengeometrie auf, hier beispielhaft eine in etwa trapezförmige Außengeometrie, so dass das Naben-Schwenkelement 9 in der in der Fig. 2 gezeigten Grundposition das Naben-Basiselement 7 im Wesentlichen vollständig überdeckt und abdeckt. Damit wird ein herkömmlicher Lenkradaufbau beibehalten.

Die Schwenkgelenkverbindung 8 ist, wie dies insbesondere auch aus der Fig. 2 ersichtlich ist, an einander zugeordneten, mit Bezug zu einer Lenkradgrundposition bei Geradeausfahrt oberen Randbereichen 12 des Naben-Schwenkelementes 9 und des Naben-Basiselementes 7 vorgesehen, wobei die Schwenkgelenkverbindung 8 hier zudem in etwa horizontal ausgerichtet ist.

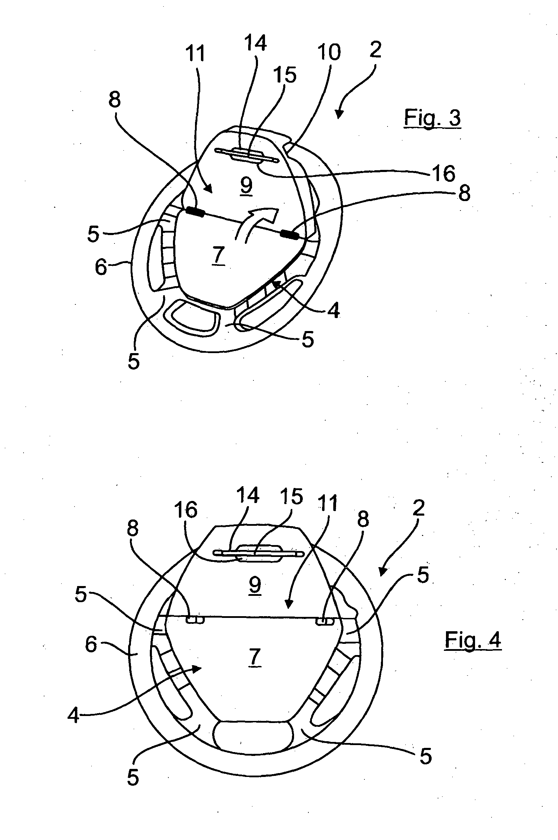

Soll nunmehr die Lenkradnabe 4 als Schreibunterlage 11 fungieren, wie dies schematisch und beispielhaft in der Fig. 1 gezeigt ist, kann vom Fahrzeugführer 3 das Naben-Schwenkelement 9 mittels der Schwenkgelenkverbindung 8 nach oben aufgeschwenkt bzw. aufgeklappt werden (Fig. 3), so dass eine Bestandteil der Nabenoberseite 13 bildende muldenförmige Ausnehmung 10 in eine konturangepasste Eingriffsverbindung an einem entsprechend zugeordneten Lenkradkranzteilbereich gelangt. Die Abstützung der muldenförmigen Ausnehmung 10 an dem Lenkradkranz 6 kann dabei so ausgebildet sein, dass hier eine Klemm- und/oder Rastverbindung ausgebildet ist, die das Naben-Schwenkelement 9 in sicherer Eingriffsverbindung mit dem Lenkradkranz 6 hält.

Desweiteren sei hier noch angemerkt, dass das Naben-Schwenkelement 9 zudem auch mittels einer hier nicht dargestellten Halteeinrichtung, die zum Beispiel durch eine Rasteinrichtung gebildet sein kann, an dem Naben-Basiselement 7 in der Grundposition (Fig. 2) gehalten sein kann. Um das Naben-Schwenkelement 9 dann die in der Fig. 3 gezeigte Position überführen zu können, wäre dann diese Halte- bzw. Rasteinrichtung entsprechend zu lösen.

Wie den Fig. 1, 3 und 4 zu entnehmen ist, bilden das Naben-Basiselement 7 und das Naben-Schwenkelement in der aufgeklappten Stellung eine relativ großflächige, ebene Auflagefläche aus, die die Schreibunterlage 11 (Fig. 1) ausbildet, auf der Papiere, Dokumente vom Fahrzeugführer abgelegt werden können.

Wie in der Fig. 3 weiter gezeigt, kann in das Naben-Schwenkelement 9 eine nutförmige Stiftausnehmung 14 eingebracht sein, in die ein Stift 15 dergestalt einklipsbar ist, dass dieser dort im Wesentlichen oberflächenbündig einliegt bzw. gehaltert ist. Zum leichteren Entnehmen dieses Stiftes 15 kann zudem die nutförmige Stiftausnehmung 14 in einem mittleren Teilbereich zu einer Eingriffsmulde 16 erweitert sein.

Wie aus den Figuren weiter ersichtlich ist, sind die in der Grundposition der Fig. 2 aneinander liegenden Anlageflächen des Naben-Basiselementes 7 und des Naben-Schwenkelementes 9 jeweils eben und/oder glattflächig ausgebildet, so dass das Naben-Basiselement 7 und das Naben-Schwenkelement 9 auch in dieser in der Fig. 2 gezeigten Grundposition in einer flächigen Anlageverbindung im Wesentlichen spaltfrei aneinander liegen.

Wie aus der Fig. 2 weiter ersichtlich ist, kann die Nabenoberseite 13 zudem mit einem Logo 17 eines Herstellers versehen sein. Dadurch ergibt sich somit ein herkömmlicher Gesamteindruck eines Lenkrads, in den in vorteilhafter Weise die Funktion als Schreibunterlage integriert ist.

### Bezugszeichenliste

- 1: Führerhaus
- 2: Lenkrad
- 3: Fahrzeugführer
- 4: Lenkradnabe
- 5: Lenkradspeichen
- 6: äußerer Lenkradkranz
- 7: Naben-Basiselement
- 8: Schwenkgelenkverbindung
- 9: Naben-Schwenkelement
- 10: muldenförmige Ausnehmung
- 11: Schreibunterlage
- 12: obere Randbereiche
- 13: Nabenoberseite
- 14: Stiftausnehmung
- 15: Stift
- 16: Eingriffsmulde
- 17: Logo

## Patentansprüche

1. Lenkrad für ein Fahrzeug, insbesondere für ein Nutzfahrzeug, mit einer Lenkradnabe (4) und einem äußeren Lenkradkranz (6), wobei die Lenkradnabe (4) ein Naben-Basiselement (7) aufweist, an dem als integraler Bestandteil der Lenkradnabe (4) ein relativ zum Naben-Basiselement (7) verlagerbares weiteres Nabenelement (9) so angebunden ist, dass das weitere Nabenelement (9) in einer Verlagerungs- oder Gebrauchsposition zusammen mit dem Naben-Basiselement (7) eine im wesentlichen ebene Auflagefläche als Schreibunterlage (11) ausbildet, und wobei das weitere Nabenelement (9) in der Verlagerungs- oder Gebrauchsposition mit einem nabenseitigen Abstützbereich am Lenkradkranz (6) abgestützt ist, **dadurch gekennzeichnet, dass** der nabenseitige Abstützbereich durch eine muldenförmige Ausnehmung (10) gebildet ist, in der ein zugeordneter Lenkradkranzteilbereich im verlagerten Zustand des weiteren Nabenelementes (9) konturangepasst einliegt und/oder aufgenommen ist.

2. Lenkrad nach Anspruch 1, **dadurch gekennzeichnet, dass** die Lenkradnabe (4) ein mittels einer Schwenkgelenkverbindung (8) schwenkbar an dem Naben-Basiselement (7) angelenktes Naben-Schwenkelement als weiteres Nabenelement (9) aufweist, das in einer Grundposition an dem Naben-Basiselement (7) anliegt, vorzugsweise in einer flächigen Anlageverbindung anliegt, und das im aufgeschwenkten Zustand zusammen mit dem Naben-Basiselement (7) die im Wesentlichen ebene Auflagefläche als Schreibunterlage (11) ausbildet.

3. Lenkrad nach Anspruch 2, **dadurch gekennzeichnet, dass** die Schwenkgelenkverbindung (8) an einander zugeordneten, mit Bezug zu einer Lenkradgrundposition bei Geradeausfahrt oberen Randbereichen (12) des Naben-Schwenkelementes (9) und des Naben-Basiselementes (7) ausgebildet ist.

4. Lenkrad nach Anspruch 2 oder 3, **dadurch gekennzeichnet, dass** die Schwenkgelenkverbindung (8) zwischen dem Naben-Basiselement (7) und dem Naben-Schwenkelement (9) mit Bezug zu einer Lenkradgrundposition bei Geradeausfahrt in einem mittleren Bereich des Lenkrades (2) angeordnet ist und in etwa horizontal ausgerichtet ist.

5. Lenkrad nach einem der vorhergehenden Ansprüche, **dadurch gekennzeichnet, dass** das weitere Nabenelement (9) in einer auf dem Naben-Basiselement (7) an-und/oder aufliegenden Grundposition dem Fahrer (3) zugewandt ist und eine Nabenoberseite (13) der Lenkradnabe (4) ausbildet.

6. Lenkrad nach einem der vorhergehenden Ansprüche, **dadurch gekennzeichnet, dass** die muldenförmige Ausnehmung (10) und/oder der zugeordnete Lenkradkranzteilbereich so ausgebildet ist oder sind, insbesondere aus einem solchen Material hergestellt ist oder sind, dass die muldenförmige Ausnehmung (10) den zugeordneten Lenkradkranzteilbereich in der Abstützposition hintergreift.

7. Lenkrad nach einem der vorhergehenden Ansprüche, **dadurch gekennzeichnet, dass** das weitere Nabenelement (9) im Wesentlichen plattenförmig ausgebildet ist.

8. Lenkrad nach einem der vorhergehenden Ansprüche, **dadurch gekennzeichnet, dass** sich das Naben-Basiselement (7) und das sich seiner Grundposition befindende weitere Nabenelement (9) mit Bezug zu einer Lenkradgrundposition bei Geradeausfahrt in etwa von einem mittleren Lenkradbereich ausgehend zu den Seiten sowie nach unten hin bis in unmittelbare Nähe des Lenkradkranzes (6) erstrecken, vorzugsweise unter Belassung eines Spaltabstandes.

9. Lenkrad nach einem der vorhergehenden Ansprüche, **dadurch gekennzeichnet, dass** das weitere Nabenelement (9) und das Naben-Basiselement (7) eine im Wesentlichen gleiche Außenkontur, insbesondere eine trapezförmige Außenkontur, aufweisen dergestalt, dass das weitere Nabenelement (9) das Naben-Basiselement (7) in der Grundposition im Wesentlichen überdeckt.

10. Lenkrad nach einem der vorhergehenden Ansprüche, **dadurch gekennzeichnet, dass** in die die Schreibunterlage (11) ausbildende ebene Auflagefläche des Naben-Basiselementes (7) und/oder des weiteren Nabenelementes (9) wenigstens ein weiteres Funktionselement integriert ist, insbesondere eine nutförmige Stiftausnehmung (14) vorgesehen ist, in die ein Stift (15) einklipsbar ist, insbesondere dergestalt einkllpsbar ist, dass dieser dort im Wesentlichen oberflächenbündig einliegt und/oder gehaltert ist.

11. Lenkrad nach Anspruch 10, **dadurch gekennzeichnet, dass** die nutförmige Stiftausnehmung (14) in wenigstens einem Teilbereich zu einer Eingriffsmulde (16) erweitert ist.

12. Lenkrad nach einem der vorhergehenden Ansprüche, **dadurch gekennzeichnet, dass** das Lenkrad (2) Lenkradspeichen (5) aufweist, die einerseits mit dem Lenkradkranz (6) und andererseits mit dem Naben-Basiselement (7) verbunden sind.

13. Lenkrad nach einem der vorhergehenden Ansprüche, **dadurch gekennzeichnet, dass** das weitere Nabenelement in dessen Grundposition mittels einer Halteeinrichtung, insbesondere mittels eines Vorspannelementes und/oder einer Rasteinrichtung, an dem Naben-Basiselement gehalten ist.

14. Lenkrad nach Anspruch 13, wenn abhängig von Anspruch 2, **dadurch gekennzeichnet, dass** ein Vorspannelement vorgesehen ist, vorzugsweise in die Schwenkgelenkverbindung integriert ist, das das weitere Nabenelement beim Freigeben der Halteverbindung der Halteeinrichtung in die Gebrauchsposition vorspannt und/oder verlagert.

15. Fahrzeug, insbesondere Nutzfahrzeug, mit einem Lenkrad (2) nach einem der vorhergehenden Ansprüche.

## Claims

1. A steering wheel for a vehicle, in particular for a commercial vehicle, with a steering wheel hub (4) and an outer steering wheel rim (6), wherein the steering wheel hub (4) has a hub base element (7) to which, as an integral part of the steering wheel hub (4), a further hub element (9) which can be repositioned relative to the hub base element (7) is connected in such a manner that, in a repositioning or use position, the further hub element (9) together with the hub base element (7) forms a substantially flat supporting surface as a writing pad (11), and wherein, in the repositioning or use position, the further hub element (9) is supported with a hub-side supporting region on the steering wheel rim (6), **characterized in that** the hub-side supporting region is formed by a trough-shaped recess (10) in which, in the repositioned state of the further hub element (9), an associated steering wheel rim partial region lies and/or is accommodated in a contour-matched manner.

2. The steering wheel according to Claim 1, **characterized in that** the steering wheel hub (4) has a hub pivoting element as the further hub element (9), which hub pivoting element is coupled pivotably to the hub base element (7) by means of a pivoting joint connection (8) and, in a basic position, bears against the hub base element (7), preferably bears thereagainst in a planar contact connection, and which, in the pivoted-up state, together with the hub base element (7) forms the substantially flat supporting surface in the form of a writing pad (11).

3. The steering wheel according to Claim 2, **characterized in that** the pivoting joint connection (8) is formed on mutually assigned upper edge regions (12), with respect to a basic position of the steering wheel during straight-ahead travel, of the hub pivoting element (9) and of the hub base element (7).

4. The steering wheel according to Claim 2 or 3, **characterized in that** the pivoting joint connection (8) between the hub base element (7) and the hub pivoting element (9) is arranged in a central region of the steering wheel (2) with respect to a basic position of the steering wheel during straight-ahead travel, and is oriented approximately horizontally.

5. The steering wheel according to one of the preceding claims, **characterized in that**, in a basic position bearing against and/or resting on the hub base element (7), the further hub element (9) faces the driver (3) and forms a hub upper side (13) of the steering wheel hub (4).

6. The steering wheel according to one of the preceding claims, **characterized in that** the trough-shaped recess (10) and/or the assigned steering wheel rim partial region are or is designed in such a manner, in particular are or is produced from such a material, that the trough-shaped recess (10) engages behind the assigned steering wheel rim partial region in the supporting position.

7. The steering wheel according to one of the preceding claims, **characterized in that** the further hub element (9) is of substantially plate-like design.

8. The steering wheel according to one of the preceding claims, **characterized in that** the hub base element (7) and the further hub element (9), in the basic position thereof, extend with respect to a basic position of the steering wheel during straight-ahead travel, approximately from a central steering wheel region to the sides and downwards into the direct vicinity of the steering wheel rim (6), preferably leaving a gap spacing.

9. The steering wheel according to one of the preceding claims, **characterized in that** the further hub element (9) and the hub base element (7) have a substantially identical outer contour, in particular a trapezoidal outer contour, in such a manner that the further hub element (9) substantially overlaps the hub base element (7) in the basic position.

10. The steering wheel according to one of the preceding claims, **characterized in that** at least one further functional element is integrated into the flat supporting surface, forming the writing pad (11), of the hub base element (7) and/or of the further hub element (9), in particular a groove-shaped pin recess (14) is provided, into which a pin (15) can be clipped, in particular can be clipped in such a manner that said pin lies and/or is held there substantially flush with the surface.

11. The steering wheel according to Claim 10, **characterized in that** the groove-shaped pin recess (14) is widened in at least one partial region to form an engagement trough (16).

12. The steering wheel according to one of the preceding claims, **characterized in that** the steering wheel (2) has steering wheel spokes (5) which are connected on one side to the steering wheel rim (6) and on the other side to the hub base element (7).

13. The steering wheel according to one of the preceding claims, **characterized in that** the further hub element, in the basic position thereof, is held on the hub base element by means of a holding device, in particular by means of a pre-stressing element and/or a latching device.

14. The steering wheel according to Claim 13 if dependent on Claim 2, **characterized in that** a pre-stressing element is provided, and is preferably integrated in the pivoting joint connection, said pre-stressing element pre-stressing and/or repositioning the further hub element into the use position when the holding connection of the holding device is released.

15. A vehicle, in particular commercial vehicle, with a steering wheel (2) according to one of the preceding claims.

## Revendications

1. Volant pour un véhicule, en particulier pour un véhicule utilitaire, comprenant un moyeu de volant (4) et une couronne de volant extérieure (6), le moyeu de volant (4) présentant un élément de base de moyeu (7) au niveau duquel est raccordé un élément de moyeu supplémentaire (9) déplaçable par rapport à l'élément de base de moyeu (7) en tant que constituant intégral du moyeu de volant (4), de telle sorte que l'élément de moyeu supplémentaire (9) constitue, dans une position de déplacement ou d'utilisation, conjointement avec l'élément de base de moyeu (7), une surface d'appui essentiellement plane en tant que support d'écriture (11), et l'élément de moyeu supplémentaire (9) étant supporté, dans la position de déplacement ou d'utilisation, avec une région de support côté moyeu, contre la couronne de volant (6), **caractérisé en ce que** la région de support côté moyeu est formée par un évidemment en forme de creux (10) dans lequel une région partielle de couronne de volant associée est insérée et/ou est reçue de manière adaptée au contour dans l'état déplacé de l'élément de moyeu supplémentaire (9).

2. Volant selon la revendication 1, **caractérisé en ce que** le moyeu de volant (4) présente un élément pivotant de moyeu articulé au moyen d'une connexion articulée pivotante (8) de manière pivotante sur l'élément de base de moyeu (7) en tant qu'élément de moyeu supplémentaire (9), lequel s'applique dans une position de base contre l'élément de base de moyeu (7), de préférence s'applique dans une connexion d'application à plat, et constitue, dans l'état ouvert par pivotement, conjointement avec l'élément de base de moyeu (7), la surface d'appui essentiellement plane en tant que support d'écriture (11).

3. Volant selon la revendication 2, **caractérisé en ce que** la connexion articulée pivotante (8) est réalisée au niveau de régions de bord supérieures (12) de l'élément pivotant de moyeu (9) et de l'élément de base de moyeu (7) associées les unes aux autres, par rapport à une position de base du volant en conduite en ligne droite.

4. Volant selon la revendication 2 ou 3, **caractérisé en ce que** la connexion articulée pivotante (8) entre l'élément de base de moyeu (7) et l'élément pivotant de moyeu (9) est disposée par rapport à une position de base du volant en conduite en ligne droite dans une région centrale du volant (2) et est orientée approximativement horizontalement.

5. Volant selon l'une quelconque des revendications précédentes, **caractérisé en ce que** l'élément de moyeu supplémentaire (9) est tourné vers le conducteur (3) dans une position de base s'appliquant et/ou reposant sur l'élément de base de moyeu (7) et constitue un coté supérieur de moyeu (13) du moyeu de volant (4).

6. Volant selon l'une quelconque des revendications précédentes, **caractérisé en ce que** l'évidement en forme de creux (10) et/ou la région partielle de couronne de volant associée est ou sont réalisé (e) (s) de telle sorte, notamment est ou sont fabriqué (e) (s) en un matériau tel que l'évidement en forme de creux (10) vienne en prise par l'arrière dans la position de support avec la région partielle de couronne de volant associée.

7. Volant selon l'une quelconque des revendications précédentes, **caractérisé en ce que** l'élément de moyeu supplémentaire (9) est réalisé essentiellement en forme de plaque.

8. Volant selon l'une quelconque des revendications précédentes, **caractérisé en ce que** l'élément de base de moyeu (7) et l'élément de moyeu supplémentaire (9) se trouvant dans sa position de base s'étendent par rapport à une position de base du volant en conduite en ligne droite approximativement à partir d'une région de volant centrale vers les côtés et vers le bas jusqu'à proximité immédiate de la couronne de volant (6), de préférence en laissant un espacement.

9. Volant selon l'une quelconque des revendications précédentes, **caractérisé en ce que** l'élément de moyeu supplémentaire (9) et l'élément de base de moyeu (7) présentent un contour extérieur essentiellement identique, en particulier un contour extérieur trapézoïdal, de telle sorte que l'élément de moyeu supplémentaire (9) recouvre essentiellement l'élément de base de moyeu (7) dans la position de base.

10. Volant selon l'une quelconque des revendications précédentes, **caractérisé en ce qu'**au moins un élément fonctionnel supplémentaire est intégré dans la surface d'appui plane de l'élément de base de moyeu (7) constituant le support d' écriture (11) et/ou de l'élément de moyeu supplémentaire (9), en particulier un évidement de goupille (14) en forme de rainure, dans lequel une goupille (15) peut être enclipsée, notamment peut être enclipsée de telle sorte que celle-ci soit essentiellement insérée et/ou retenue à cet endroit essentiellement en affleurement avec la surface.

11. Volant selon la revendication 10, **caractérisé en ce que** l'évidement de goupille (14) en forme de rainure est élargi dans au moins une région partielle pour former un creux d'engagement (16).

12. Volant selon l'une quelconque des revendications précédentes, **caractérisé en ce que** le volant (2) présente des rayons de volant (5) qui sont connectés d'une part à la couronne de volant (6) et d'autre part à l'élément de base de moyeu (7).

13. Volant selon l'une quelconque des revendications précédentes, **caractérisé en ce que** l'élément de moyeu supplémentaire, dans sa position de base, est retenu au moyen d'un dispositif de retenue, en particulier au moyen d'un élément de précontrainte et/ou d'un dispositif d'encliquetage, sur l'élément de base de moyeu.

14. Volant selon la revendication 13, lorsqu'elle dépend de la revendication 2, **caractérisé en ce qu'**un élément de précontrainte est prévu, de préférence est intégré dans la connexion articulée pivotante, lequel précontraint et/ou déplace dans la position d'utilisation l'élément de moyeu supplémentaire lors de la libération de la connexion de retenue du dispositif de retenue.

15. Véhicule, en particulier véhicule utilitaire, comprenant un volant (2) selon l'une quelconque des revendications précédentes.
